# EUROPÄISCHE PATENTANMELDUNG

(11) **EP 4 494 825 A1**
(43) Veröffentlichungstag der Anmeldung: **22.01.2025**
(21) Anmeldenummer: 24189646.3
(22) Anmeldetag: 19.07.2024
(51) Int. Cl.: B28B 1/00, B29C 64/106, B29C 64/209, B33Y 10/00, B33Y 30/00, B33Y 40/00, E04G 21/04, B29C 64/30

(54) **VORRICHTUNG ZUR ADDITIVEN FERTIGUNG VON BAUWERKEN ODER BAUTEILEN VON BAUWERKEN**

(30) Priorität: 19.07.2023 DE 102023119137
(71) Anmelder: PERI SE, 89264 Weißenhorn (DE)
(72) Erfinder: KUNER, David, 89264 Weißenhorn (DE); FRANK, Achim, 89264 Weißenhorn (DE); BUTTALA, Sasha, 89264 Weißenhorn (DE); PAINTNER, Thomas, 89264 Weißenhorn (DE)
(74) Vertreter: Markfort, Iris-Anne Lucie

(57) **Zusammenfassung**

Die Erfindung betrifft eine Vorrichtung (1) zur additiven Fertigung von Bauwerken (2) oder Bauteilen (3) von Bauwerken (2) auf einem Untergrund (4) aufweisend eine in mehreren Freiheitsgraden bewegbare Materialausgabeeinheit (7), die zur Abscheidung eines Baustoffes schichtenweise in vorgegebenen Druckbahnen (8) geeignet ist und eine von einem Aktuator (7.2) angetriebene Fördereinrichtung (7.1) umfasst, die dazu eingerichtet ist, um den abzuscheidenden Baustoff entlang eines Weges zu einem Auslass der Materialausgabeeinheit (7) zu fördern, und eine Aktuatorbaugruppe (10), die ausgebildet ist, die Materialausgabeeinheit (7) über eine Arbeitsfläche zu bewegen, sowie eine Markierungseinrichtung (100), die eingerichtet ist, eine Markierung (300) auf dem Untergrund (4) aufzubringen, wobei die Markierungseinrichtung (100) wirkverbunden mit der Fördereinrichtung (7.1) an der Fördereinrichtung (7.1) der Materialausgabeeinheit (7) anordenbar ist sowie ein zugehöriges Verfahren, ein Computerprogramm und eine Markierungseinrichtung zur Verwendung in einer oben genannten Vorrichtung.

## Beschreibung

Vorrichtungen und Verfahren zur additiven Fertigung von dreidimensionalen Objekten werden bekanntermaßen zur Fertigung von Modellen, Prototypen, Werkzeugen und Endprodukten eingesetzt. Dabei werden Ausgangsmaterialien in Form von Flüssigkeiten, Pulver oder Filamenten aus thermoplastischen Kunststoffen von einem an einem Endeffektor einer Aktuatorbaugruppe befestigten Druckkopf abgeschieden, um auf Grundlage von Daten des zu fertigenden Objekts das Objekt schichtweise aufzubauen. Ein derartiges Verfahren wird unter anderem auch als generatives Fertigungsverfahren oder 3D-Druckverfahren bezeichnet.

Mittlerweile ist es auch bekannt, additive Fertigungsverfahren zur Fertigung von ganzen Bauwerken oder Bauteilen von Bauwerken (beispielsweise Wänden oder Schalungen) zu verwenden. Die additive Fertigung von Bauwerken oder deren Bauteilen vermag die Produktivität im Bauwesen erheblich zu steigern. Durch den so genannten 3D-Betondruck werden Bauwerke schneller und zu geringeren Kosten herstellbar. Mithilfe eines 3D-Betondruckers lassen sich Betonstrukturen ohne Schalung schnell und kostengünstig realisieren, bei gleichzeitig größter Gestaltungsfreiheit.

Problematisch gestaltet sich allerdings die additive Fertigung von Bauwerken oder deren Bauteilen, da das Bauwerk oder Bauteils des Bauwerks insbesondere auf eine bereits betonierte Bodenplatte oder auch auf einen sonstigen Untergrund aufgebracht, auch gedruckt genannt, wird. Hier ist insbesondere ein händisches Vermessen der Position der Bodenplatte auf dem Gelände oder auch von etwaigen Anschlussbewehrungen und deren Position auf der Bodenplatte und jeweils relativ zu der Position des zu druckenden Gebäudes oder Gebäudeteils auf der Bodenplatte oder auf dem Untergrund notwendig, da die Bodenplatte und auch Anschlussbewehrungen von anderen Gewerken als von der 3D-Druck-Organisation hergestellt werden. Dieses Vermessen ist notwendig, da beispielsweise die Position der Bodenplatte auf dem Gelände und/oder die Position von Bewehrungen auf der Bodenplatte aufgrund von verschiedensten Umgebungsbedingungen, unter anderen durch fehlende Absprachen zwischen den Gewerken oder Hindernissen auf dem Gelände, auf welcher die Bodenplatte hergestellt werden soll bzw. Hindernissen auf der Bodenplatte, auf welcher die Bewehrungen angebracht werden, abweichend von der Position auf dem Gelände bzw. auf der Bodenplatte gemäß eines Bauplans oder Grundrisses ist, auf Basis welcher das Gebäude oder Gebäudeteils von der additiven Fertigungseinrichtung hergestellt wird. Findet ein solches relatives Vermessen nicht statt, ist es wahrscheinlich, dass das zu druckende Gebäude bzw. Bauteils des Gebäudes falsch auf der Bodenplatte oder Untergrund positioniert wird und in besonders gravierenden Fällen der Drucker außerhalb der Bodenplatte druckt oder die Bewehrungen nicht korrekt erreicht bzw. der Drucker mit herausragenden Bewehrungen kollidiert.

Es ist bekannt, dass zur Verbesserung des Problems mittels der Materialausgabeeinheit des 3D-Druckers die Druckbahn des zu druckenden Grundrisses leer, das heißt ohne Material bzw. Baustoff auszugeben, auf dem zu bedruckenden Untergrund abgefahren und dabei die Stellen notiert werden, an welchen die Position der Materialausgabeeinheit relativ zum zu bedruckenden Untergrund nicht mit der Position laut Gebäudeplan oder Bauplan übereinstimmt oder beispielsweise auch Hindernisse einen späteren Druck behindern. Auf Basis dieser Notizen kann der 3D-Drucker dann auf die tatsächlichen Umgebungsbedingungen angepasst werden, beispielsweise die Position des zu druckenden Grundrisses relativ zur tatsächlichen Position der Bodenplatte auf dem Gelände verschoben werden. Dieses manuelle oder händische Notieren ist wieder sehr zeit- und vor allem weiter fehleranfällig, beispielsweise aufgrund von Messungenauigkeiten.

Als Alternative sind Markierungseinrichtungen wie Stifte bekannt, die in der Materialausgabeeinheit eingespannt werden können und die abzufahrende Druckbahn auf dem zu druckenden Untergrund markiert, um visuell sichtbar zu machen, ob sich die zu druckende Druckbahn in der korrekten Position relativ zum zu bedruckenden Untergrund befindet. Dies ist allerdings nachteilig, da der Stift und daher die Materialausgabeeinheit nah am Untergrund fahren muss, um die Druckbahn zu markieren und hier eventuell durch Hindernisse wie Bewehrungen sich Kollisionen mit der Materialausgabeeinheit ergeben können. Weiter kann aufgrund von Abweichungen in der Vertikalrichtung zwischen Position der Materialausgabeeinheit und Untergrund der Stift entweder keinen Kontakt mit dem Untergrund haben, was dazu führt, dass die Druckbahn nicht markiert wird oder zu viel Kontakt mit dem Untergrund hat, was dazu führt, dass der Stift beschädigt wird. Will man weiterhin beispielsweise einen Grundriss markieren, welcher Aussparungen aufgrund von Fenstern oder Türen hat und daher keine durchgehende Markierung benötigt, muss die Materialausgabeeinheit an den Stellen, wo markiert werden soll, die korrekte Höhe finden, dass der Stift den Untergrund zur Markierung berührt und an den Stellen, wo nichts markiert werden soll, vertikal nach oben verfahren, damit der Stift den Untergrund nicht berührt. Dies erfordert eine aufwändige Steuerung und/oder ein aufwändigen Befestigungsmechanismus des Stiftes an der Materialausgabeeinheit. Insbesondere kann die Markierung an Stellen, wo nicht markiert werden soll, nicht effizient gestoppt werden, sondern benötigt alternativ zum vertikalen Verfahren der Materialausgabeeinheit einen aufwändigen Mechanismus, der das Markieren stoppt.

Aus einer älteren Anmeldung der Anmelderin gemäß der Offenlegungsschrift DE 10 2020 132 151 A1 ist ein Verfahren zur additiven Fertigung von Bauwerken oder Bauteilen von Bauwerken auf einem Untergrund bekannt, wonach eine Materialausgabeeinheit in mehreren Freiheitsgraden bewegt wird, um einen Baustoff schichtweise in vorgegebenen Druckbahnen auszubringen. Es ist vorgesehen, dass eine Sensoreinrichtung verfahrensrelevante Merkmale des Untergrunds erfasst, wobei wenigstens eine Positionierungshilfe für das Verlegen einer Bewehrung in Abhängigkeit von den von der Sensoreinrichtung erfassten verfahrensrelevanten Merkmalen auf den Untergrund aufgebracht wird. Bei einer Ausführungsform kann eine Markierung auf dem Untergrund angebracht werden, mittels derer dem Fachpersonal die Position, an der beispielsweise ein Bewehrungskorb oder eine Bewehrungsmatte aufzustellen ist, angezeigt werden. Ein manuelles Nachmessen bzw. Errechnen der korrekten Position der Bewehrung muss somit nicht von dem Fachpersonal selbst durchgeführt werden. Dabei kann insbesondere vorgesehen sein, dass die Markierung von einem Laser, von einem Zeichengerät (z. B. einem Stift) und/oder von der Materialausgabeeinheit (z. B. als punktuell abgegebene Kleinstmenge des Baustoffs) aufgebracht wird. Die Mittel zur Aufbringung der Markierung (beispielsweise ein Laser oder ein Zeichengerät) können an der Materialausgabeeinheit, an einem sonstigen beweglichen Teil der Vorrichtung und/oder statisch (insbesondere im Falle des Lasers), beispielsweise an einem Baugerüst, befestigt sein.

Aus der Druckschrift US 10 920 434 B1 ist es bekannt, mit Hilfe einer robotischen Vorrichtung mit einem bewegbaren Portalroboter im 3D-Betondruck auch additiv Wände herzustellen. Bei dieser Anwendung ist das Portal ein lineares, computergesteuertes X, Y, Z-Portal, auf dem ein verlängerter Wagen und ein mechanischer Roboterarm mit einer aufgesetzten Düse für die additive Fertigung Material extrudieren können, um Wände und andere strukturelle oder dekorative Elemente herzustellen. Ein Schneckenantriebs- und Mischmodul auf der Portalbrücke kann das Zusatzmaterial mischen und entlang der Brücke bis zum oberen Auftragsarm und durch den Auftragsdüsenarm und die gesteuerte Zusatzdüse ausstoßen. Beton, Zuschlagstoffe oder andere Zusatzstoffe können auch durch ein Rohr von einem Zementwagen oder -mischer und über einen Rohrträger nach unten zu einem Schneckenantriebs- und Mischmodul auf einem Wagen gepumpt werden, das die richtige Menge an Material durch die kontrollierte Düse für die Zusatzstoffherstellung ausstößt.

In einer alternativen Ausführungsform ist gezeigt, dass an einem Geräteanschluss eines alternativen Roboterarms verschiedene Bauwerkzeuge für die Durchführung bestimmter Projekte angebracht werden können, z. B. auch eine Düse für die additive Fertigung und eine Sprühmarkierungsdüse.

In jeder dieser Ausführungsformen übernimmt somit der zugeordnete Roboterarm die Ansteuerung des jeweils angeschlossenen Geräts, beispielsweise der Düse für die additive Fertigung oder der Sprühmarkierungsdüse.

Schließlich offenbart die Druckschrift DE 10 2016 009 340 A1 auf einem alternativen technischen Gebiet eine Vorrichtung zur Streckenmessung, mit einem handbetätigbaren Gestell, an dem ein Messrad drehbar angeordnet ist, wobei die Vorrichtung eingerichtet ist, um eine Länge einer Wegstrecke anhand einer Drehung des Messrads zu erfassen, wenn das Gestell mit dem Messrad entlang der Wegstrecke geführt wird, wobei an dem Gestell eine Positionsanzeigeeinrichtung lagefest relativ zu dem Messrad angeordnet ist. Weiter betrifft die Erfindung ein Verfahren zum Markieren von Messpunkten entlang eines Spalts an wenigstens einem Karosseriebauteil unter Verwendung einer solchen Vorrichtung.

In Anbetracht des bekannten Standes der Technik besteht die Aufgabe der vorliegenden Erfindung darin, eine gegenüber dem bekannten Stand der Technik verbesserte Vorrichtung mit einer vorteilhaften Markierungseinrichtung bereitzustellen.

Schließlich ist es auch Aufgabe der Erfindung, ein gegenüber dem bekannten Stand der Technik verbessertes Verfahren mit einer vorteilhaften Markierungseinrichtung zur additiven Fertigung von Bauwerken oder Bauteilen von Bauwerken bereitzustellen.

Außerdem ist es Aufgabe der Erfindung, ein vorteilhaftes Computerprogramm sowie eine Markierungseinrichtung bereitzustellen.

Die Aufgabe wird für die Vorrichtung mit den in Anspruch 1 aufgeführten Merkmalen gelöst. Hinsichtlich des Verfahrens wird die Aufgabe durch die Merkmale des Anspruchs 9 gelöst. Betreffend das Computerprogramm wird die Aufgabe durch Anspruch 14 gelöst. Betreffend die Markierungseinrichtung wird die Aufgabe durch Anspruch 15 gelöst.

Die abhängigen Ansprüche und die nachfolgend beschriebenen Merkmale betreffen vorteilhafte Ausführungsformen und Varianten der Erfindung.

Es ist eine Vorrichtung zur additiven Fertigung von Bauwerken oder Bauteilen von Bauwerken vorgesehen.

Als Bauwerke können im Rahmen der Erfindung Bauwerke aller Art, insbesondere aber Schutzbauten, wie Gebäude zur Unterbringung und zum Aufenthalt von Menschen oder Tieren, Schutzwälle, Deiche, Schutzräume, Einfriedungen, Wehr- und Befestigungsanlagen, Stadtmauern und Gefängnismauern verstanden werden. Es kann sich bei einem Bauwerk allerdings auch um ein Verkehrsbauwerk handeln, beispielsweise um eine Straße, einen Fußgängerweg, eine Brücke oder einen Tunnel. Auch Ver- und Entsorgungsbauwerke wie Brunnen, Klärwerke, Staudämme, Schornsteine oder temporäre Bauwerke können im Rahmen der Erfindung additiv gefertigt werden.

Bei einem Bauteil eines Bauwerks kann es sich im Rahmen der Erfindung insbesondere um eine funktionelle Komponente eines Bauwerks handeln, insbesondere um einen funktionell oder geometrisch zusammenhängenden Teil des Bauwerks, wie zum Beispiel eine Wand, eine Stütze oder eine Treppe. Auch ein Gebäudeteil aus mehreren Bestandteilen des Bauwerks (zum Beispiel ein Stockwerk bzw. eine Etage eines Gebäudes) kann unter dem Begriff "Bauteil" im Rahmen der Erfindung zusammengefasst sein.

Unter einem Untergrund kann im Rahmen der Erfindung insbesondere ein Baugrund und/oder ein Fundament, eine Bodenplatte verstanden werden, auf dem das Bauwerk errichtet wird. Bei dem erfindungsgemäßen Untergrund kann es sich allerdings auch um ein Stockwerk eines mehrstöckigen Gebäudes oder um einen mobilen, beweglichen Untergrund handeln. Beispielsweise kann vorgesehen sein, das Bauwerk samt Untergrund nach der additiven Fertigung bis zu seinem vorgesehenen Aufstellort zu transportieren. Grundsätzlich kann sich jede Fläche, auf der das Bauwerk errichtet werden kann (dauerhaft oder vorübergehend) als Untergrund im Rahmen der Erfindung eignen.

Erfindungsgemäß wird eine Materialausgabeeinheit in mehreren Freiheitsgraden bewegt, um einen Baustoff schichtweise in vorgegebenen Druckbahnen auszubringen.

Die Druckbahnen können auf Grundlage von Daten des Bauwerks bzw. Bauteils berechnet werden. Derartige Verfahren sind aus dem herkömmlichen 3D-Druck bereits bekannt. Bei den Daten des Bauwerks bzw. Bauteils kann es sich insbesondere um dreidimensionale CAD-Daten handeln. Das Bauwerk bzw. Bauteil kann in den Daten insbesondere durch Punktewolken, Kantenmodelle, Flächenmodelle und/oder Volumenmodelle repräsentiert sein.

Es kann eine Steuereinrichtung und/oder Ansteuereinrichtung vorgesehen sein, die die Vorrichtung und/oder das Verfahren steuert bzw. regelt.

Beispielsweise kann die Steuereinrichtung zur Berechnung der Druckbahnen anhand der eingegebenen Daten eingerichtet sein. Die Steuereinrichtung kann beispielsweise eingerichtet sein, um aus den Daten des Bauwerks bzw. Bauteils ein virtuelles Modell des Bauwerks bzw. Bauteils im bekannten STL-Format ("Standard Triangulation/Tesselation Language"-Format) zu berechnen. Im Rahmen des STL-Formats können die Bauwerks-/Bauteildaten mit Hilfe von Dreiecksfacetten beschrieben werden. Das Prinzip ist bekannt und wird demnach nicht näher beschrieben. Eine STL-Schnittstelle ist eine Standardschnittstelle vieler CAD-Systeme. Vorliegend kann die Steuereinrichtung eingerichtet sein, um aus beliebigen CAD-Daten zunächst STL-Daten für die Weiterverarbeitung zu berechnen. Die Steuereinrichtung kann allerdings auch eingerichtet sein, bereits Daten im STL-Format aufzunehmen und weiterzuverarbeiten. Grundsätzlich kann auch ein beliebiges anderes Datenformat vorgesehen sein.

Unabhängig davon, ob die STL-Daten von der Steuereinrichtung selbst erzeugt oder nur an diese übertragen wurden, kann die Steuereinrichtung eingerichtet sein, um anhand der STL-Daten (oder anhand sonstiger Daten) die Bauwerks-/Bauteildaten in Druckerdaten für einen 3D-Druck (bzw. für die additive Fertigung) umzuwandeln. Hierfür kann unter anderem vorgesehen sein, die Daten bzw. STL-Daten in einzelne zu druckende Schichten umzuwandeln (sogenanntes "Slicen"), wonach für die einzelnen Schichten die Druckbahnen berechnet werden, um die Bewegungen der Materialausgabeeinheit vorzugeben.

Erfindungsgemäß ist eine Vorrichtung zur additiven Fertigung von Bauwerken oder Bauteilen von Bauwerken auf einem Untergrund vorgesehen, aufweisend eine in mehreren Freiheitsgraden bewegbare Materialausgabeeinheit, die zur Abscheidung eines Baustoffes schichtenweise in vorgegebenen Druckbahnen geeignet ist und eine von einem Aktuator angetriebene Fördereinrichtung umfasst, die dazu eingerichtet ist, um den abzuscheidenden Baustoff entlang eines Weges zu einem Auslass der Materialausgabeeinheit zu fördern, und eine Aktuatorbaugruppe, die ausgebildet ist, die Materialausgabeeinheit über eine Arbeitsfläche zu bewegen, sowie eine Markierungseinrichtung, die eingerichtet ist, eine Markierung auf dem Untergrund aufzubringen, wobei die Markierungseinrichtung wirkverbunden an der Fördereinrichtung der Materialausgabeeinheit anordenbar ist.

Dabei gibt das Merkmal "wirkverbunden" an, dass zwischen den wirkverbundenen Komponenten oder Teilen der Vorrichtung eine direkte Verbindung oder Interaktion besteht, derart dass Änderungen in der einen der wirkverbundenen Komponenten der Vorrichtung sich direkt auf die andere der wirkverbundenen Komponenten auswirken können.

"Wirkverbunden" bezeichnet somit die Beziehung oder Kopplung zwischen zwei oder mehreren Bauteilen oder Komponenten einer Vorrichtung, Maschine oder Anlage, bei der eine Funktion, Bewegung oder Wirkung des einen Bauteils eine direkte oder indirekte Auswirkung auf das andere Bauteil hat. Diese Verbindung kann mechanisch, elektrisch, hydraulisch, pneumatisch oder durch andere physikalische Prinzipien realisiert sein, wobei die Art der Verbindung entscheidend dafür ist, dass die Bauteile zusammenwirken, um eine spezifische technische Aufgabe oder Funktion zu erfüllen.

In einer bevorzugten Variante weist die Materialausgabeeinheit eine Aufnahme für die Markierungseinrichtung auf. Dadurch kann die Markierungseinrichtung in einfacher Art und Weise mit der Materialausgabeeinheit verbunden und die Funktion der Markierung ermöglicht werden. Weiter bevorzugt, ist die Fördereinrichtung mit der Markierungseinrichtung zur Aktivierung und/oder Deaktivierung der Markierungseinrichtung verbunden.

Dadurch, dass die an die an 3D-Druckern ohnehin vorhandene Materialausgabeeinheit anordenbare Markierungseinrichtung mit der vorhandenen Fördereinrichtung der Materialausgabeeinheit wirkverbunden ist, können ohne separate Aktuatoren und Antriebseinheiten in effizienter Weise Markierungen angebracht werden. So lässt sich beispielsweise durch Aktivierung der Fördereinrichtung die Markierungseinrichtung starten, das heißt, die Markierungseinrichtung markiert und durch Deaktivierung der Fördereinrichtung die Markierungseinrichtung stoppen, das heißt die Markierungseinrichtung stoppt das Markieren.

Vorzugsweise ist die Markierungseinrichtung eingerichtet, eine von der Materialausgabeeinheit abzufahrende Druckbahn auf dem Untergrund wenigstens abschnittsweise zu markieren.

Somit kann eine später zu abzufahrende und zu druckende Druckbahn in einfacher Art und Weise auf dem Untergrund markiert werden. Während der Visualisierung erfolgt dabei keine Ausgabe von Baustoff aus der Materialausgabeeinheit. Dies kann beispielsweise dadurch ermöglicht werden, dass sich in der Materialausgabeeinheit während der Markierungsarbeiten kein aufzubringendes Material! kein aufzubringender Baustoff befindet und/oder die Materialausgabe zeitweise gestoppt wird. Wurde die Markierung auf dem Untergrund fertiggestellt und soweit notwendig darauf basierende Änderungen in die Druckdatei, insbesondere zur relativen Position des zu druckenden Bauwerkes oder Bauteils des Bauwerks eingearbeitet, kann entweder die Markierungseinrichtung erneut aktiviert werden, um die Änderungen zu verifizieren oder die Markierungseinrichtung von der Materialausgabeeinheit entfernt und mit dem Druck des Bauwerkes oder Bauteils des Bauwerkes gestartet werden.

In einer weiteren vorteilhaften Ausgestaltung weist die Markierungseinrichtung mindestens ein Abgabebehältnis zur Abgabe von insbesondere Farbpartikel enthaltende, mit Aerosolen, Flüssig- oder Pulverstoffen auf oder ist die Markierungseinrichtung als Lasermarkiereinrichtung ausgebildet.

Ist die Markierungseinrichtung als Lasermarkiereinrichtung ausgebildet, bringt diese vorzugsweise eine dauerhafte Markierung auf den Untergrund ein. Dies wird ermöglicht, in dem ein so starker Laser verwendet wird, der die Markierung auf den Untergrund einbrennt oder einschmilzt. Eine solche Anwendung hat den Vorteil, dass die Markierung auch bei unvorteilhaften Umgebungsbedingungen wie beispielsweise Regen, bestehen bleibt. Aber selbstverständlich wird unter Markierung ebenfalls eine nicht dauerhafte Markierung verstanden.

Die Ausgestaltung der Markierungseinrichtung als Abgabebehältnis zur Abgabe von insbesondere Farbpartikel enthaltenden Aerosolen, Flüssig- oder Pulverstoffen als Lasermarkiereinrichtung hat den besonderen Vorteil, dass ein gewisser vertikaler Abstand zwischen dem Untergrund und der Markierungseinrichtung bestehen kann, anders als bei der Verwendung eines Stiftes wie im Stand der Technik, wo der Stift immer mit dem Untergrund in Kontakt sein muss, um die Markierung anzubringen. Durch den vertikalen Abstand werden Kollisionen zwischen der Markierungseinrichtung bzw. mit der Materialausgabeeinheit und Hindernissen auf dem Untergrund vermieden.

Weiter bevorzugt handelt es sich bei dem Abgabebehältnis um eine mit Farbpartikeln enthaltende, mit Aerosolen, Flüssig- oder Pulverstoffen befüllte, insbesondere druckbeaufschlagte Spraydose.

Die Verwendung einer solchen Spraydose weist den besonderen Vorteil auf, dass sich diese flexibel austauschen lässt, wenn beispielsweise das Abgabebehältnis aufgebraucht ist oder eine andere Farbe für die Markierung verwendet werden soll.

Besonders bevorzugt weit die Materialausgabeeinheit eine Aufnahme für die Markierungseinrichtung auf.

Weiter bevorzugt ist die Fördereinrichtung mit der Markierungseinrichtung zur Aktivierung und/oder Deaktivierung der Markierungseinrichtung wirkverbunden. In einer ganz besonders vorteilhaften Weise ist die Fördereinrichtung als rotierende Welle, insbesondere Extruder, ausgebildet, die über eine Kupplung in eine der Markierungseinrichtung zugeordnete Welle eingreift.

Solche rotierende Wellen, insbesondere Extruder, sind gemeinhin bekannt und werden in vielen konkreten Anwendungen im Beton-3D-Druck zur Förderung von Baustoff innerhalb des Druckkopfes von einem Einlass zu einem Auslass verwendet, um dann das Material bzw. den Baustoff auszugeben, das heißt zu drucken. Durch die Verwendung einer Kupplung und einer der Markierungseinrichtung zugeordneten Welle, kann die Rotationsbewegung der Förderungseinrichtung verwendet werden, um ohne größeren konstruktionstechnischen Aufwand eine Rotation in der Markierungseinrichtung zu erzeugen. Insbesondere wird dadurch kein separater Antrieb benötigt, um die Markierungseinrichtung zu aktivieren oder deaktivieren, das heißt, zu markieren oder das Markieren zu stoppen.

Zusätzlich weist die Markierungseinrichtung eine mit zumindest einer Erhebung ausgebildete Drehscheibe auf, die mit der rotierenden Welle der Markierungseinrichtung wirkverbunden ist.

Ganz besonders bevorzugt umfasst die Markierungseinrichtung weiterhin einen Führungsschenkel, der mit der Drehscheibe derart zusammenwirkt, dass die von der rotierenden Welle der Materialausgabeeinheit resultierende Rotationsbewegung in eine lineare Bewegung des Führungsschenkels umwandelbar ist.

Ganz konkret bedeutet dies, dass die Rotationsbewegung der rotierenden Welle der Fördereinrichtung über eine Kupplung und eine der Markierungseinrichtung zugeordnete Welle sowie einer mit zumindest einer Erhebung ausgebildete Drehscheibe, die mit der rotierenden Welle der Markierungseinrichtung wirkverbunden ist sowie der Verwendung eines Führungsschenkels in eine lineare Bewegung umwandelbar ist. Hierbei sind der Führungsschenkel und die mit der zumindest einen Erhebung ausgebildete Drehscheibe in vorteilhafter Weise so zueinander angeordnet, dass bei Kontakt der Erhebung mit dem Führungsschenkel eine Linearbewegung des Führungsschenkels ausgelöst wird. Steht die Drehscheibe mit dem Führungsschenkel gerade so zueinander, dass die Erhebung der Drehscheibe den Führungsschenkel kontaktiert, wird keine Linearbewegung ausgelöst.

Besonders bevorzugt ist die Drehscheibe aber mit mehreren Erhebungen ausgebildet.

Besonders bevorzugt umfasst die Markierungseinrichtung eine Betätigungseinrichtung für das Abgabebehältnis oder die Lasermarkiereinrichtung.

Besonders bevorzugt umfasst die Markierungseinrichtung einen Hebel, insbesondere Kipphebel, welcher derart mit dem Abgabebehälter oder der Lasermarkiereinrichtung verbunden ist, dass bei Betätigung des Hebels Aerosole, Flüssig- oder Pulverstoffe freigesetzt werden oder die Lasermarkiereinrichtung aktiviert wird, um die Druckbahn wenigstens abschnittsweise zu markieren.

Diese Verwendung eines Hebels hat den besonderen Vorteils, dass dadurch die Kraftrichtung umgeleitet wird, um in einfacher Art die Lasermarkiereinrichtung oder den Abgabebehälter zu aktivieren, um die Druckbahn zu markieren.

Die vorangehende Erläuterung zeigt einen in einfacher Weise zu realisierenden Mechanismus, der es erlaubt, eine Markierungseinrichtung mit einer Materialausgabeeinheit einer Vorrichtung zur additiven Fertigung wirkverbunden anzuordnen, sodass kein separater Antrieb zur Aktivierung und/oder Deaktivierung der Markierungseinrichtung notwendig ist. Diese Markierungseinrichtung lässt sich somit in einfacher Art und Weise fertigen und an die Materialausgabeeinheit anbringen und nutzt den ohnehin der Materialausgabeeinheit zugeordneten Aktuator zu deren Aktivierung, das heißt, um den Untergrund zu markieren.

Weiterhin bevorzugt weist die Vorrichtung zur additiven Fertigung wenigstens eine Ansteuereinrichtung auf, die dazu eingerichtet ist, wenigstens den Aktuator zum Antreiben der Fördereinrichtung anzusteuern und eine Steuereinrichtung, die dazu eingerichtet ist, die zum Bewegen der Materialausgabeeinheit verwendete Aktuatorbaugruppe über die Arbeitsfläche anzusteuern.

Durch diese Ansteuereinrichtung und/oder Steuereinrichtung wird es beispielsweise ermöglicht, dass der Aktuator und die Aktuatorbaugruppe nicht manuell gesteuert, beispielsweise aktiviert oder deaktiviert werden müssen, sondern beispielsweise basierend auf einer in der Ansteuereinrichtung und/oder Steuereinrichtung abgelegten, abgespeicherten Vorgehensweise. Dabei kann die Ansteuereinrichtung für den Aktuator die Steuereinrichtung für die Aktuatorbaugruppe umfassen oder in kommunikativer Verbindung mit der Steuereinrichtung für die Aktuatorbaugruppe stehen.

In einer besonders bevorzugten Weitergestaltung kann die Steuereinrichtung für die Aktuatorbaugruppe UND/ODER die Ansteuereinrichtung für den Aktuator eine Schnittstelle aufweisen, um hierüber Daten von einem zu erstellenden Bauwerk oder Bauteils des Bauwerks, insbesondere ein Grundriss, ein Bauplan oder eine Bauzeichnung des zu erstellenden Bauwerks oder Bauteils des Bauwerks zu erhalten und eine Recheneinheit, um die erhaltenden Daten in Daten zur Markierung der Druckbahn umzuwandeln.

So kann es ermöglicht werden, dass die Markierungseinrichtung zumindest teilautomatisiert eine von der Materialausgabeeinheit abzufahrende Druckbahn auf dem Untergrund wenigstens abschnittsweise markiert. Beispielsweise wird dann die Materialausgabeeinheit an den Stellen aktiviert, an welchen später Material additiv auf den Untergrund aufgebracht werden soll und an den Stellen deaktiviert, an welchen später kein Material additiv auf den Untergrund aufgebracht werden soll, weil sich dort beispielsweise eine Aussparung für eine Tür oder Fenster befindet.

Die Erfindung betrifft auch ein Verfahren zur additiven Fertigung von Bauwerken oder Bauteilen von Bauwerken auf einem Untergrund mit einer Vorrichtung zur additiven Fertigung von Bauwerken oder Bauteilen von Bauwerken nach den vorangehenden Beschreibungen und Erläuterungen, wobei die Markierungseinrichtung eine Markierung auf den Untergrund aufbringt, wobei die Markierung eine zu abzufahrende Druckbahn des Bauwerks oder Bauteils des Bauwerks wenigstens abschnittsweise auf dem Untergrund visualisiert.

Weiter bevorzugt ist, dass die Markierung in Abhängigkeit von Vorgaben aus einer Bauzeichnung oder einem Gebäudeplan oder einen Grundriss auf den Untergrund aufgebracht wird.

Gemäß einer weiteren bevorzugten Ausgestaltung wird die Markierung von einem mit Aerosolen, Flüssig- oder Pulverstoffen befüllten Abgabebehältnis oder eine Lasermarkiereinrichtung von der Markierungseinrichtung auf den Untergrund aufgebracht.

Weiter bevorzugt ist die Markierungseinrichtung mit der Materialausgabeeinheit wirkverbunden und wird durch Aktivierung der Fördereinrichtung der Materialausgabeeinheit aktiviert, sodass die Markierungseinrichtung eine Markierung auf den Untergrund aufbringt.

Zusätzlich ist weiterhin vorgesehen, dass die Markierungseinrichtung mit der Materialausgabeeinheit wirkverbunden ist und durch Deaktivierung der Fördereinrichtung der Materialausgabeeinheit deaktiviert wird.

Das Verfahren ist weiterhin besonders bevorzugt gekennzeichnet durch die folgenden Schritte:
- Übernahme von Daten, insbesondere beinhaltend eine Bauzeichnung oder ein Gebäudeplan oder ein Grunriss, von einem durch die Vorrichtung zu erstellenden Bauwerk oder Bauteils des Bauwerks in eine Ansteuereinrichtung zur Ansteuerung eines Aktuators zum Antreiben der Fördereinrichtung UND/ODER in eine Steuereinrichtung zur Ansteuerung einer Aktuatorbaugruppe zum Bewegen der Materialausgabeeinheit über die Arbeitsfläche,
- Ansteuerung der Ansteuereinrichtung UND/ODER der Steuereinrichtung auf Basis der Daten und Aktivierung des Aktuators UND/ODER der Aktuatorbaugruppe
- Markieren der Druckbahn durch die Markierungseinrichtung während des Überfahrens der Druckbahn durch die Materialausgabeeinheit, wobei keine Ausgabe von Baustoff aus der Materialausgabe erfolgt.

Weiter bevorzugt umfasst die Ansteuereinrichtung für den Aktuator die Steuereinrichtung für die Aktuatorbaugruppe oder steht in kommunikativer Verbindung mit der Steuereinrichtung für die Aktuatorbaugruppe.

Weiterhin betrifft die Erfindung ein Computerprogramm, welches Steuerbefehle umfasst, die bei der Ausführung des Programms eine Steuereinrichtung und/oder Ansteuereinrichtung veranlasst, das vorher beschriebene Verfahren auszuführen.

Weiterhin betrifft die Erfindung eine Markierungseinrichtung zur Verwendung in einer vorangehend beschriebenen Vorrichtung.

Merkmale, die im Zusammenhang mit einem der Gegenstände der Erfindung, namentlich gegeben durch das erfindungsgemäße Verfahren, die erfindungsgemäße Vorrichtung, das Computerprogramm und das additiv gefertigte Bauwerk/Bauteil beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1 % oder weniger, und ganz besonders bevorzugt ±0,1 % oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1 eine Vorrichtung zur additiven Fertigung von Bauwerken oder deren Bauteilen, so wie diese aus dem Stand der Technik bekannt ist, auf einem Untergrund in einer perspektivischen Darstellung;
- Figur 2 eine erfindungsgemäße Vorrichtung zur additiven Fertigung von Bauwerken oder deren Bauteilen mit einer erfindungsgemäßen Markierungseinrichtung in einer besonders bevorzugten Ausführungsform
- Figur 3 die erfindungsgemäße Markierungseinrichtung, die an der Materialausgabeeinheit angeordnet ist in einer Vertikalschnittansicht
- Figur 4 die erfindungsgemäße Markierungseinrichtung in einer perspektivischen Ansicht
- Figur 5 die erfindungsgemäße Markierungseinrichtung in einer seitlichen Vertikalschnittansicht

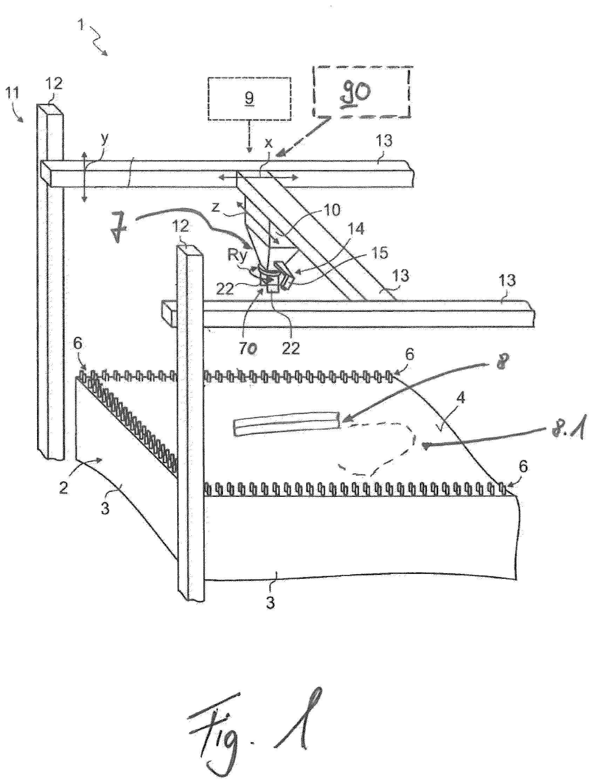

Figur 1 zeigt perspektivisch eine Vorrichtung 1 zur additiven Fertigung von Bauwerken 2 oder Bauteilen 3 von Bauwerken 2 auf einem Untergrund 4. Beispielhaft ist ein Ausschnitt eines additiv gefertigten, mehrstöckigen Gebäudes 2 gezeigt, das mehrere Außenwände und eine Bodenplatte umfasst. Die Bodenplatte dient im Rahmen des nachfolgend beschriebenen Fertigungsschritts als Untergrund 4 zur additiven Fertigung der Außenwände und/oder Innenwände der nachfolgenden Gebäudeetage. Als Bauteil können beispielsweise die Außenwände 3 angesehen werden.

Das dargestellte Gebäude 2 soll beispielhaft aus Beton gefertigt werden. Die Anschlussbewehrung 6 Bodenplatte ragt hierzu aus den Außenwänden des Bauwerks 2 heraus.

Die Vorrichtung 1 weist eine in mehreren Freiheitsgraden x, y, z bewegbare Materialausgabeeinheit 7 auf, die eingerichtet ist, um den Baustoff, vorliegend fließfähig angemischter Beton, schichtweise in vorgegebenen Druckbahnen 8 auszubringen. In Figur 1 ist schematisch ein Teil einer solchen Druckbahn 8, die bereits gedruckt worden ist, zu sehen. Weiterhin wurde hier auf eine erste Schicht bereits eine zweite Schicht gedruckt. Ein Teil der weiteren abzufahrenden Druckbahn, auf der aber noch kein Baustoff appliziert worden ist, ist gestrichelt 8.1 gekennzeichnet.

Die Steuerung der Materialausgabeeinheit 7 kann von einer in Figure Ref. 1 strichliniert dargestellten Steuereinrichtung 9 erfolgen. Die Steuereinrichtung 9 kann beispielsweise eingerichtet sein, um die Materialausgabeeinheit 7 in Abhängigkeit der vorgesehenen Druckbahnen 8 anzusteuern. Hierzu kann ein entsprechendes Computerprogramm mit Steuerbefehlen auf der Steuereinrichtung 9 ausgeführt werden. Hierzu kann die Steuereinrichtung eine Aktuatorbaugruppe 10 zum Bewegen der Materialausgabeeinheit 7 über die Arbeitsfläche ansteuern. Zur Berechnung der Druckbahnen 8 kann vorzugsweise ein Bau- und/oder Bewehrungsplan herangezogen werden.

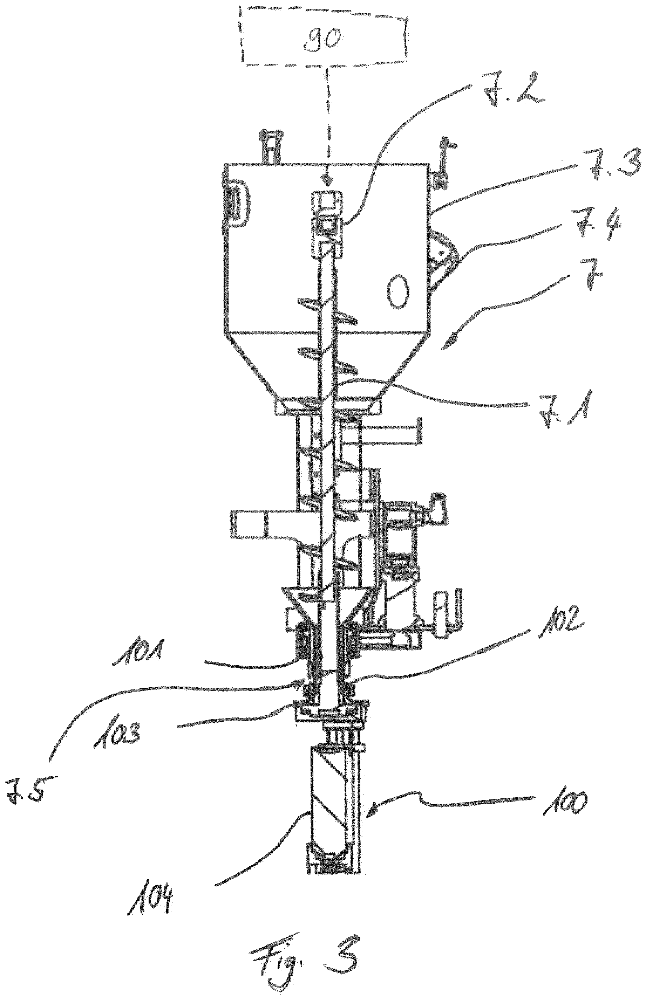

Weiterhin kann eine Ansteuereinrichtung 90 vorhanden sein, die eingerichtet ist, einen Aktuator (nicht in der Abbildung gezeigt) anzusteuern, der eine Fördereinrichtung (siehe hierzu Figur 3) der Materialausgabeeinheit 7 anzusteuern vermag, um Baustoff auszubringen.

In dem in Figur 1 dargestellten Ausführungsbeispiel ist die Materialausgabeeinheit 7 in allen drei Translationsfreiheitsgraden x, y, z bewegbar. Die Materialausgabeeinheit 7 ist hierzu an mit einer Aktuatorbaugruppe 10 an einer Portalkraneinheit 11 befestigt. Die Verwendung einer Portalkraneinheit 11 und damit die Bereitstellung eines sogenannten Portaldruckers hat sich allerdings als besonders geeignet herausgestellt. Die Portalkraneinheit 11 kann mehrere statisch angeordnete Stützpfeiler 12 und entlang der Stützpfeiler 12 oder zwischen den Stützpfeilern 12 bewegliche Querträger 13 aufweisen.

Die Vorrichtung 1 weist eine Sensoreinrichtung 14 auf, die eingerichtet ist, um verfahrensrelevante Merkmale des Untergrunds 4 zu erfassen. Eine Erfassung der verfahrensrelevanten Merkmale kann vorzugsweise während des Ausbringens des Baustoffs erfolgen. Die Sensoreinrichtung 14 kann vorzugsweise zusammen mit der Materialausgabeeinheit 7 an der Aktuatorbaugruppe 10 bzw. der Portalkraneinheit 11 befestigt sein. Auf diese Weise kann die Sensoreinrichtung 14 synchron mit der Materialausgabeeinheit 7 bewegt werden. Die für die Bewegung der Materialausgabeeinheit 7 ohnehin erforderliche Aktorik kann somit vorteilhaft auch zur Bewegung der Sensoreinrichtung 14 verwendet werden. Grundsätzlich kann die Sensoreinrichtung 14 auch statisch um das Bauwerk 2 bzw. Bauteil 3 herum angeordnet sein, beispielsweise an den seitlichen Stützpfeilern 12 der Portalkraneinheit 11 oder an den Querträgern 13 der Portalkraneinheit 11. Die Sensoreinrichtung 14 kann mehrere einzelne Sensoreinheiten aufweisen, beispielsweise mehrere Kameras 15 und/oder Laserscanner, die oberhalb des Untergrunds 4 verteilt angeordnet sind (beweglich oder unbeweglich).

Die Sensoreinrichtung 14 und die damit verbundenen weiteren erläuterten Bauteile und Baugruppen sind allerdings nicht als zwingend für die Erfindung zu verstehen und zeigen lediglich eine mögliche Ausgestaltung eines bereits bekannten Vorrichtung 1 zur additiven Fertigung von Gebäuden 2 oder Bauteilen 3 von Gebäuden.

An der Materialausgabeeinheit 7 kann eine Düse 70 angeordnet sein, um den Baustoff auszubringen, vorzugsweise in einer gewünschten Form, je nach Querschnitt der Düse 70, beispielsweise rechteckig. Optional kann die Düse 70 seitliche Führungsschenkel 22, insbesondere zwei sich gegenüberliegende Führungsschenkel 22 aufweisen, um den Baustoff währenddes Ausbringens seitlich zu stabilisieren bzw. in Form zu bringen. Die Führungsschenkel 22 sind beispielhaft in Figur 1 dargestellt. Alternativ kann die Düse 70 auch integraler Bestandteil der Materialausgabeeinheit 7 sein.

Die Düse 70 kann über die Materialausgabeeinheit 7 entlang der drei Translationsfreiheitsgrade x, y, z bewegt werden, außerdem auch in einem, zwei oder in allen drei Rotationsfreiheitsgraden Rx, Ry, Rz bewegbar sein. Es kann auch vorteilhaft sein, die Düse 70 zu verdrehen, wie dies in Figur 1 anhand des Rotationsfreiheitsgrades Ry angedeutet ist, insbesondere wenn die Materialausgabeeinheit 7 den Baustoff in länglicher Form, beispielsweise in der vorgesehenen Wandstärke einer additiv zu fertigenden Wandung, ausbringen und einem kurvigen Wandungsverlauf folgen soll.

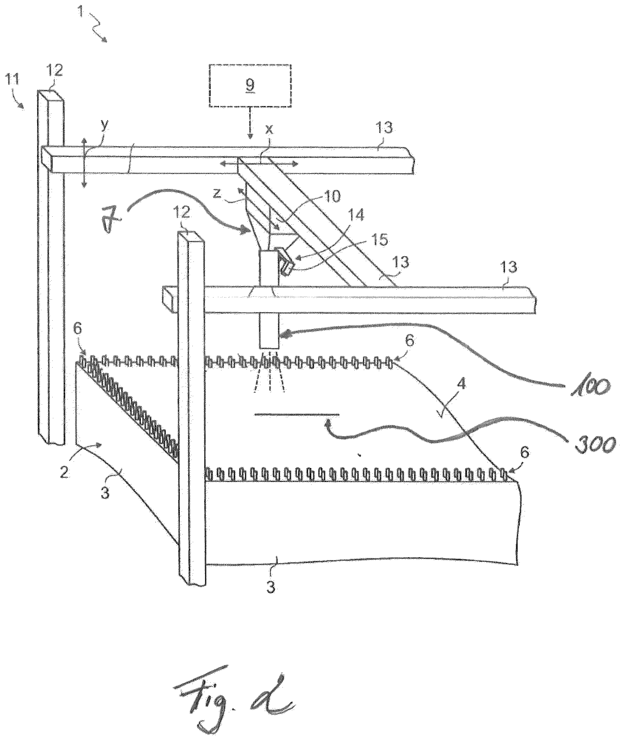

Im Gegensatz zu Figur 1 ist in Figur 2 eine schematisch angedeutete Markierungseinrichtung 100 an der Materialausgabeeinheit 7 über eine Aufnahme wirkverbunden angeordnet. Details zur Markierungseinrichtung sind in den Figuren 3 - 5 zu sehen und werden weiter unten näher beschrieben. Im Gegensatz zu Figur 1 ist in Figur 2 also die Markierungseinrichtung 100 statt der Düse 70 an der Materialausgabeeinheit angeordnet. Die Düse 70 wurde also zumindest zeitweise entfernt. Selbstverständlich besteht auch die Möglichkeit, die Markierungseinrichtung 100 über die Düse 70 wirkverbunden an der Materialausgabeeinheit 7 anzuordnen.

Die Markierungseinrichtung 100 ist eingerichtet, um eine Markierung 300 auf dem Untergrund 4 aufzubringen. Die Markierung 300 ist abschnittsweise und schematisch in Figur 2 zu sehen. Hier ist die Markierungseinrichtung 100 eingerichtet, eine von der Materialausgabeeinheit 7 abzufahrende Druckbahn 8 (siehe Figur 1) wenigstens abschnittsweise zu markieren. Die Markierung 300 entspricht also der Druckbahn, entlang welcher später über die Materialausgabeeinheit 7 Baustoff ausgebracht werden soll, um das Gebäude bzw. Bauteilen der Gebäude herzustellen. Zunächst wird also die abzufahrende Druckbahn 8 zumindest abschnittsweise durch die Markierungseinrichtung 100 auf dem Untergrund 4 markiert. Somit kann visuell erkannt werden, ob die später abzufahrende und herzustellende Druckbahn 8 relativ korrekt, das heißt beispielsweise nach einem Bauplan getreu, auf dem Untergrund 4 platziert wird oder ob beispielsweise Abweichungen vorhanden sind, was passieren kann, wenn der Untergrund 4 ungenau gefertigt oder Hindernisse wie beispielsweise Bewehrungen 6, die ungenau am Untergrund 4 angebracht worden sind, im Weg sind, die den späteren Druck erschweren. Im schlimmsten Fall könnte der Untergrund 4 beispielsweise so ungenau gefertigt worden sind, dass der Baustoff nicht auf dem Untergrund 4 ausgebracht wird, sondern daneben. Solche Probleme lassen sich durch die Erfindung vermeiden, da, wenn eine abzufahrende Druckbahn 4 zumindest abschnittsweise durch die Markierungseinrichtung 100 in Form einer Markierung 300 auf dem Untergrund 4 vor der Ausbringung des Materials markiert wird, schnell erkannt wird, ob es Abweichungen gegenüber Vorgaben gibt. Anschließend kann die Druckbahn 8 angepasst werden, insbesondere im Raum verschoben werden und der eigentliche Druck kann erfolgen.

Figur 3 zeigt eine erfindungsgemäße Markierungseinrichtung 100, die an der Materialausgabeeinheit 7 angeordnet ist in einer Vertikalschnittansicht, insbesondere um die Wirkverbundenheit der Markierungseinrichtung 100 mit der Fördereinrichtung 7.1 der Materialausgabeeinheit 7 besser zu verstehen. Die Materialausgabeeinheit 7 weist ein Behältnis 7.3 zur zeitweisen Speicherung von auszubringendem Baustoff auf. Der Baustoff wird über einen Einlass 7.4 in das Behältnis eingebracht und kann über die Fördereinrichtung 7.1 entlang eines Weges zu einem Auslass gefördert werden, wonach Baustoff auf einem Untergrund schichtenweise in vorgegebenen Druckbahnen ausgebracht werden kann. In diesem Ausführungsbeispiel ist am Auslass keine Düse angebracht, diese kann aber in anderen Ausführungsbeispielen am Auslass angebracht sein. Die Fördereinrichtung 7.1 der Materialausgabeeinheit wird über einen schematisch dargestellten Aktuator 7.2 angetrieben, der die Fördereinrichtung 7.1 entlang seiner Längsachse rotieren lässt. Die Fördereinrichtung 7.1 ist hier als rotierende Welle, als Extruder ausgebildet, über den sich in bekannter Weise Baustoff entlang eines Weges fördern lässt. Der Aktuator 7.2 wird von einer Ansteuereinrichtung 90 angesteuert. Die Ansteuereinrichtung gibt dem Aktuator 7.2 also beispielsweise ein Signal, zu starten. Anschließend lässt der Aktuator die Fördereinrichtung 7.1 rotieren und - wenn sich Baustoff im Behältnis 7.3 befindet - Baustoff wird in Richtung des Auslasses gefördert. Simultan kann die Ansteuereinrichtung 90 dem Aktuator 7.2 auch ein Signal zum Stoppen geben, wodurch die Fördereinrichtung 7.1 die Rotation beendet.

An einem Ende der Materialausgabeeinheit 7 ist die Markierungseinrichtung 100 wirkverbunden mit der Fördereinrichtung 7.1 angeordnet. Die Markierungseinrichtung 100 ist hier über die Aufnahme 7.5 mit der Materialausgabe 7 gekoppelt. Die Aufnahme kann beispielsweise ein bekannten Bajonett-Verschluss, eine Schraub-Gewinde-Verbindung oder eine von weiteren Verbindungsmöglichkeiten sein. In diesem Ausführungsbeispiel ist die Aufnahme als Bajonett-Verschluss ausgestaltet. Die Markierungseinrichtung 100 weist in diesem Ausführungsbeispiel ein Abgabebehältnis 104 zur Abgabe von Farbpartikel enthaltene Aerosole auf. Das Abgabebehältnis 104 kann allerdings aber auch Flüssig- oder Pulverstoffe aufweisen. Alternativ kann die Markierungseinrichtung 100 auch als Lasermarkiereinrichtung (nicht in den Abbildungen dargestellt) ausgebildet sein. Ist die Markierungseinrichtung 100 als Lasermarkiereinrichtung ausgebildet, kann die Markierung dauerhaft auf den Untergrund 4 eingebracht werden, beispielsweise wenn dieser durch die Lasermarkiereinrichtung aufgeschmolzen oder eingebrannt wird. Im konkret vorliegenden Fall handelt es sich beim Abgabebehältnis 104 um eine Farbpartikel enthaltende, druckbeaufschlagte Spraydose.

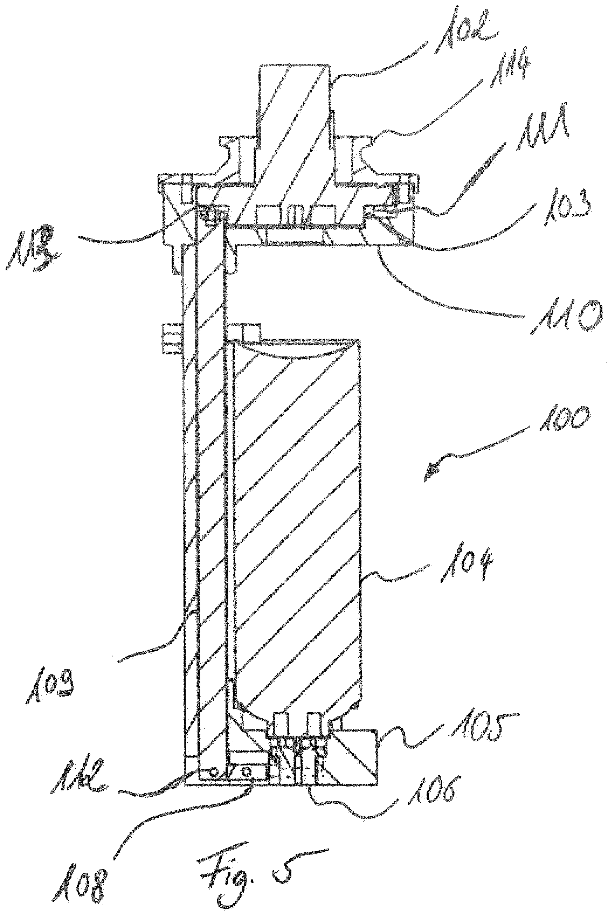

Die Markierungseinrichtung 100 weist weiterhin eine rotierende Welle 102 auf, die über eine Kupplung 101 mit der Fördereinrichtung 7.1 wirkverbunden ist. Dadurch wird die Drehbewegung der als Extruder ausgebildeten Fördereinrichtung 7.1 an die rotierende Welle 102 der Markierungseinrichtung 100 übergeben. Über eine Mechanik, unter anderem mittels einer Drehscheibe 103, die an der rotierenden Welle 102 der Markierungseinrichtung angeordnet ist, lässt sich durch Ansteuerung des Aktuators 7.2, der die Fördereinrichtung 7.1 steuert, die Markierungseinrichtung 100 aktivieren bzw. deaktivieren. Diese Mechanik ist in Figur 5 detaillierter erläutert. Die Kupplung 101 ist hier in einfachster Weise als Hohlrohr mit Innengewinde ausgestaltet, welches auf ein Ende der Fördereinrichtung 7.1 sowie auf die rotierende Welle 102 der Markierungseinrichtung aufgeschraubt werden kann.

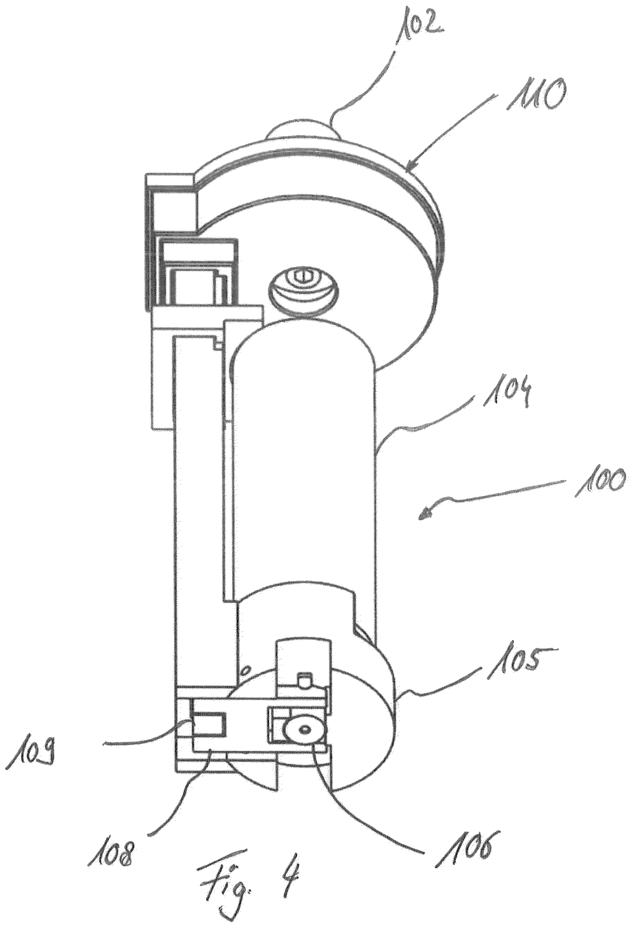

Figur 4 zeigt eine erfindungsgemäße Markierungseinrichtung 100 in perspektivischer Ansicht. Zu sehen sind ein Abschnitt der rotierenden Welle 102 sowie das als mit Farbpartikel enthaltende druckbeaufschlagte Spraydose ausgestaltete Abgabebehältnis 104, das bereits in der Beschreibung zu Figur 3 erläutert worden sind. Die Düse dieses Abgabebehältnisses 104, die zur Ausbringung der Aerosole (wahlweise auch Flüssig- oder Pulverstoffe) ausgestaltet ist, ist mit 106 gekennzeichnet. Dieses Abgabebehältnis 104 ist über eine Aufnahme 105 lösbar fest mit der Markierungseinrichtung 100 verbunden. Dies bedeutet, dass das Abgabebehältnis 104 von der Markierungseinrichtung 100 entfernt werden kann, wenn beispielsweise das Abgabebehältnis 104 aufgebraucht ist oder eine andere Farbe zur Markierung des Untergrunds 4 verwendet werden soll. Zusätzlich ist in Figur 4 zu erkennen, dass die Markierungseinrichtung 100 mit einem Gehäuse 110 ummantelt ist, um die Mechanik und weitere innere Bauteile vor Schmutz und Beschädigungen zu schützen und auch den Führungsschenkel 109, die rotierende Welle 102, die Drehscheibe 103, den Hebel 108 und weitere Bauteile und Baugruppen der Markierungseinrichtung 100 zu lagern. Weiterhin in Figur 4 zu erkennen ist ein unteres Ende eines Führungsschenkels 109, welcher mit der in Figur 3 und Figur 5 beschriebenen Drehscheibe 103 derart zusammenwirkt, dass die von der Fördereinrichtung 7.1 resultierende Rotationsbewegung in eine lineare Bewegung des Führungsschenkels 109 umgewandelt wird. Ganz konkret bewegt sich dadurch der Führungsschenkel 109 vertikal nach oben und unten. Eine detailliertere Erläuterung zu dieser Funktionsweise findet sich in Figur 5. Weiterhin in Figur 4 zu sehen ist ein Hebel 108, der als Kipphebel ausgestaltet und ein erstes Ende des Hebels 108 über eine Lagereinrichtung mit dem unteren Ende des Führungsschenkels 109 verbunden ist. Bewegt sich hier der Führungsschenkel 109 nach unten, bewegt sich ein zweites Ende des Hebels 108 nach oben. Ganz allgemein lässt sich diese Funktionsweise auch als Wippe betrachten. Das zweite Ende des Hebels 108 ist derart mit dem Abgabebehältnis 104 verbunden, dass bei Betätigung des Hebels die im Abgabebehältnis enthaltenen Aerosole, Flüssig- oder Pulverstoffe freigesetzt werden oder im Falle der Verwendung einer Lasermarkiereinrichtung diese aktiviert wird, um die Druckbahn zu markieren. In der hier vorliegenden Ausführungsform der Erfindung wird durch Betätigung des Hebels 108 ein Druck auf die Düse 106 oder auf ein mit der Düse verbundenes Bauteil ausgeübt, sodass enthaltene Aerosole freigesetzt werden. Wird kein Druck mehr auf die Düse 106 oder ein mit der Düse verbundenes Bauteil ausgeübt, das heißt der Hebel 108 wird nicht betätigt, werden keine Aerosole mehr freigesetzt bzw. die Freisetzung wird gestoppt.

Schließlich zeigt Figur 5 die erfindungsgemäße Markierungseinrichtung 100, die auch in den Figuren 3 und 4 gezeigt und beschrieben wird, in einer seitlichen Vertikalschnittansicht, um die Funktionsweise der Markierungseinrichtung 100 noch detaillierter zu erläutern. Wie bereits erläutert, weist die Markierungseinrichtung 100 ein über die Aufnahme 105 lösbar fest mit der Markierungseinrichtung 100 verbundenes Abgabebehältnis 104 in Form einer Spraydose, welche eine Düse 106 umfasst, auf. Über diese Düse 106 oder ein mit der Düse verbundenes Bauteil lassen sich mittels Druckbeaufschlagung die in der Spraydose enthaltenen Aerosole freisetzen und die Druckbahn wird zumindest abschnittsweise markiert. Eine solche als Spraydose ausgestaltetes Abgabebehältnis 104 mit einer Düse 106, die durch Druckbeaufschlagung beinhaltete Aerosole freigibt, ist im Stand der Technik bekannt. Bedruckaufschlagt wird die Düse 106 oder ein mit der Düse 106 wirkverbundenes Bauteil durch den Hebel 108, der hier als Kipphebel ausgestaltet ist. Bewegt sich das sich der Düse 106 zugewandte Ende des Hebels 108 nach oben, kontaktiert der Hebel 108 die Düse 106 bzw. ein mit der Düse 106 wirkverbundenes Bauteil und es wird auf die Düse 106 bzw. auf ein wirkverbundenes Bauteil ein Druck ausgeübt, sodass Aerosole freigesetzt werden. Die Markierungseinrichtung 100 ist dann aktiviert und bringt eine Markierung 300 auf einen Untergrund 4 auf. Bewegt sich das der Düse 106 zugewandte Ende des Hebels 108 in eine andere Richtung, sodass die Düse 106 bzw. das mit der Düse 106 wirkverbundene Bauteil nicht mehr vom Hebel 108 kontaktiert wird, wird die Freigabe der Aerosole gestoppt bzw. werden keine Aerosole mehr freigegeben. Die Markierungseinrichtung 100 ist dann deaktiviert, bringt also keine Markierung 300 auf den Untergrund 4 mehr auf. Am anderen Ende des Hebels 108 ist dieser über eine beispielhafte Bolzenverbindung 112 mit dem Führungsschenkel 109 verbunden. Der sich linear, insbesondere auf- und abbewegende Führungsschenkel 109 löst durch die Bolzenverbindung 112 eine ebenfalls Auf- und Abbewegung des Hebels 108 aus. Bewegt sich der Führungsschenkel 109 beispielsweise nach unten, löst dies eine Aufwärtsbewegung des Hebels 108 an dem der Markierungseinrichtung 100 zugewandten Ende aus, wodurch das Abgabebehältnis 104 aktiviert wird und umgekehrt. Die Verbindung von Führungsschenkel 109 und Hebel 108 funktioniert also wie eine Wippe. Die Linearbewegung des Führungsschenkels wird durch eine rotierende Drehscheibe 103 erzeugt. Wie beispielsweise in den Ausführungen zu Figur 4 bereits erläutert, erhält die Drehscheibe 103 die Rotationsbewegung durch die Kopplung mit der Fördereinrichtung 7.1. Die Drehscheibe 103 weist an der dem Führungsschenkel 109 zugewandten Seite radial angeordnete Erhebungen 111 auf. Zusätzlich oder alternativ können auch Vertiefungen vorgesehen sein. Zur Funktionsweise muss mindestens eine Erhebung vorhanden sein. In Fig. 5 ist eine dieser Erhebungen 111 zu erkennen. Besonders vorteilhaft weist die Drehscheibe 103 aber mehrere dieser Erhebungen 111 auf. Die Drehscheibe 103 und der Führungsschenkel 109 sind nun so zueinander angeordnet, dass die Erhebung 111 beim Überfahren des oberen Bereichs 113 des Führungsschenkels 109 dieser von der Erhebung 111 kontaktiert wird und somit linear, hier vertikal nach unten bewegt wird. Befindet sich gerade keine Erhebung 111 oberhalb des oberen Bereichs 113 des Führungsschenkels 109, wird dieser auch nicht kontaktiert und somit auch nicht linear nach unten verfahren. Je nach Anzahl der Erhebungen 111 auf der Drehscheibe 103 und/oder deren Abmessungen und Abständen zueinander, wird der Führungsschenkel 109 während einer Umdrehung weniger, öfter, länger, kürzer kontaktiert und so auch die Markierungseinrichtung 100 aktiviert bzw. deaktiviert. 114 zeigt eine Aufnahmevorrichtung zur Kopplung der Markierungseinrichtung 100 mit der Materialausgabeeinheit 7. In diesem Ausführungsbeispiel ist die Aufnahmevorrichtung ein Teil eines bekannten Bajonett-Verschlusses.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Für einen Fachmann ist es insbesondere offensichtlich, dass die Erfindung nicht nur für Portaldrucker angewendet werden kann, sondern auch für andere 3D-Drucker, wie beispielsweise Roboterarme. Auch können alternativ oder kumulativ zu Beton andere Baustoffe angewendet werden.

## Patentansprüche

1. Vorrichtung (1) zur additiven Fertigung von Bauwerken (2) oder Bauteilen (3) von Bauwerken (2) auf einem Untergrund (4), aufweisend eine in mehreren Freiheitsgraden bewegbare Materialausgabeeinheit (7), die zur Abscheidung eines Baustoffes schichtenweise in vorgegebenen Druckbahnen (8) geeignet ist und eine von einem Aktuator (7.2) angetriebene Fördereinrichtung (7.1) umfasst, die dazu eingerichtet ist, um den abzuscheidenden Baustoff entlang eines Weges zu einem Auslass der Materialausgabeeinheit (7) zu fördern, und eine Aktuatorbaugruppe (10), die ausgebildet ist, die Materialausgabeeinheit (7) über eine Arbeitsfläche zu bewegen, sowie eine Markierungseinrichtung (100), die eingerichtet ist, eine Markierung (300) auf dem Untergrund (4) aufzubringen,
***dadurch gekennzeichnet, dass*** die Markierungseinrichtung (100), insbesondere zur Aktivierung und/oder Deaktivierung der Markierungseinrichtung (100), wirkverbunden mit der Fördereinrichtung (7.1) an der Fördereinrichtung (7.1) der Materialausgabeeinheit (7) anordenbar ist.

2. Vorrichtung (1) nach einem der vorhergehenden Ansprüche, ***dadurch gekennzeichnet, dass*** die Fördereinrichtung (7.1) als rotierende Welle, insbesondere Extruder ausgebildet ist, die über eine Kupplung (101) in eine der Markierungseinrichtung (100) zugeordnete rotierende Welle (102) eingreift.

3. Vorrichtung (1) nach Anspruch 1, ***dadurch gekennzeichnet, dass*** die Markierungseinrichtung (100) eingerichtet ist, eine von der Materialausgabeeinheit (7) abzufahrende Druckbahn (8, 8.1) auf dem Untergrund (4) wenigstens abschnittsweise zu markieren,
*und*/*oder dass* die Markierungseinrichtung (100) mindestens ein Abgabebehältnis (104) zur Abgabe von insbesondere Farbpartikel enthaltenden Aerosolen, Flüssig- oder Pulverstoffen aufweist, bei dem es sich beispielsweise um eine mit Farbpartikeln enthaltende, mit Aerosolen, Flüssig- oder Pulverstoffen befüllte, insbesondere druckbeaufschlagte, Spraydose handelt,
*oder dass* die Markierungseinrichtung (100) als Lasermarkiereinrichtung ausgebildet ist, *wobei optional* die Lasermarkiereinrichtung eine dauerhafte Markierung auf den Untergrund (4) einbringt.

4. Vorrichtung (1) nach einem der vorhergehenden Ansprüche, ***dadurch gekennzeichnet, dass*** die Markierungseinrichtung (100) eine mit zumindest einer Erhebung (111) ausgebildete Drehschreibe (103) aufweist, die mit der rotierenden Welle (102) der Markierungseinrichtung (100) wirkverbunden ist,
*wobei optional* die Markierungseinrichtung (100) einen Führungsschenkel (109) umfasst, der mit der Drehscheibe (103) derart zusammenwirkt, dass die von der rotierenden Welle der Materialausgabeeinheit (7) resultierende Rotationsbewegung in eine lineare Bewegung des Führungsschenkels (109) umwandelbar ist,
*und wobei beispielsweise* die Markierungseinrichtung (100) einen Hebel (108), insbesondere Kipphebel, umfasst, welcher derart mit dem Abgabebehältnis (104) oder der Lasermarkiereinrichtung verbunden ist, dass bei Betätigung des Hebels (108) Aerosole, Flüssig- oder Pulverstoffe freigesetzt werden oder die Lasermarkiereinrichtung aktiviert wird, um die Druckbahn (8, 8.1) wenigstens abschnittsweise zu markieren.

5. Vorrichtung (1) nach einem der vorhergehenden Ansprüche, ***dadurch gekennzeichnet, dass*** die Vorrichtung (1) wenigstens eine Ansteuereinrichtung (90) aufweist, die dazu eingerichtet ist, wenigstens den Aktuator (7.2) zum Antreiben der Fördereinrichtung (7.1) anzusteuern und eine Steuereinrichtung (9) aufweist, die dazu eingerichtet ist, die Aktuatorbaugruppe (10) zum Bewegen der Materialausgabeeinheit (7) über die Arbeitsfläche anzusteuern,
*wobei optional* die Ansteuereinrichtung (90) für den Aktuator (7.2) die Steuereinrichtung (9) für die Aktuatorbaugruppe (10) umfasst oder in kommunikativer Verbindung mit der Steuereinrichtung (9) für die Aktuatorbaugruppe (10) steht.

6. Vorrichtung (1) nach Anspruch nach einem der vorhergehenden Ansprüche, ***dadurch gekennzeichnet, dass*** die Steuereinrichtung (9) für die Aktuatorbaugruppe (10) UND/ODER die Ansteuereinrichtung (90) für den Aktuator (7.2) eine Schnittstelle aufweist, um hierüber Daten von einem zu erstellenden Bauwerk (2) oder Bauteils (3) des Bauwerks, insbesondere ein Grundriss, ein Bauplan oder eine Bauzeichnung des zu erstellenden Bauwerks (2) oder Bauteils (3) des Bauwerks zu erhalten und eine Recheneinheit, um die erhaltenden Daten in Daten zur Markierung der Druckbahn (8, 8.1) umzuwandeln.

7. Verfahren zur additiven Fertigung von Bauwerken (2) oder Bauteilen (3) von Bauwerken auf einem Untergrund (4) mit einer Vorrichtung (1) zur additiven Fertigung von Bauwerken (2) oder Bauteilen (3) von Bauwerken nach einem der Ansprüche 1 bis 6, ***dadurch gekennzeichnet, dass*** die Markierungseinrichtung (100) eine Markierung (300) auf den Untergrund (4) aufbringt, wobei die Markierung (300) eine abzufahrende Druckbahn (8, 8.1) des Bauwerks (2) oder Bauteils (3) des Bauwerks wenigstens abschnittsweise auf dem Untergrund (4) visualisiert.

8. Verfahren nach Anspruch 7, ***dadurch gekennzeichnet, dass*** die Markierung (300) in Abhängigkeit von Vorgaben aus einer Bauzeichnung, einem Gebäudeplan oder einem Grundriss auf den Untergrund (4) aufgebracht wird,
*und*/*oder wobei* die Markierung (300) von einem mit Aerosolen, Flüssig- oder Pulverstoffen befüllten Abgabebehältnis (104) oder einer Lasermarkiereinrichtung von der Markierungseinrichtung (100) auf den Untergrund (4) aufgebracht wird.

9. Verfahren nach Anspruch 8, ***dadurch gekennzeichnet, dass*** die Markierungseinrichtung (100) durch Aktivierung der Fördereinrichtung (7.1) der Materialausgabeeinheit (7) aktiviert wird und eine Markierung (300) auf den Untergrund (4) aufbringt,
*wobei optional* die Markierungseinrichtung (100) durch Deaktivierung der Fördereinrichtung (7.1) der Materialausgabeeinheit (7) deaktiviert wird.

10. Verfahren nach einem der vorhergehenden Ansprüche, ***gekennzeichnet durch*** die Schritte
• Übernahme von Daten, insbesondere beinhaltend eine Bauzeichnung oder einen Gebäudeplan oder einem Grundriss, von einem durch die Vorrichtung (1) zu erstellenden Bauwerk (2) oder Bauteils (3) des Bauwerks in eine Ansteuereinrichtung (90) zur Ansteuerung eines Aktuators (7.2) zum Antreiben der Fördereinrichtung (7.1) und in eine Steuereinrichtung (9) zur Ansteuerung einer Aktuatorbaugruppe (10) zum Bewegen der Materialausgabeeinheit (7) über eine Arbeitsfläche,
• Ansteuerung der Ansteuereinrichtung (90) und der Steuereinrichtung (9) auf Basis der Daten und Aktivierung des Aktuators (7.2) und der Aktuatorbaugruppe (10),
• Markieren der Druckbahn (8, 8.1) durch die Markierungseinrichtung (100) während des Überfahrens der Druckbahn (8, 8.1) durch die Materialausgabeeinheit (100), wobei keine Ausgabe von Baustoff aus der Materialausgabeeinheit (100) erfolgt.

11. Verfahren nach Anspruch 10, ***dadurch gekennzeichnet dass*** die Ansteuereinrichtung (90) für den Aktuator (7.2) die Steuereinrichtung (9) für die Aktuatorbaugruppe (10) umfasst oder in kommunikativer Verbindung mit der Steuereinrichtung (9) für die Aktuatorbaugruppe (10) steht.

12. Computerprogramm, umfassend Steuerbefehle, die bei der Ausführung des Programms durch eine Steuereinrichtung (9) und/oder Ansteuereinrichtung (90) diese veranlassen, das Verfahren gemäß einem der Ansprüche 7 bis 11 auszuführen.

13. Markierungseinrichtung (100) zur Verwendung in einer Vorrichtung (1) nach einem der Ansprüche 1 bis 6.
